# EUROPÄISCHE PATENTSCHRIFT

(11) **EP 3 774 629 B1**
(45) Veröffentlichungstag und Bekanntmachung des Hinweises auf die Patenterteilung: **08.05.2024**
(21) Anmeldenummer: 19711937.3
(22) Anmeldetag: 26.03.2019
(51) Int. Cl.: B66B 5/18, B66B 17/34

(54) **ZANGENBREMSE FÜR EINE AUFZUGSANLAGE, DIE INSBESONDERE ALS HALTE- UND SICHERHEITSBREMSE DIENT**
CLASP BRAKE FOR AN ELEVATOR SYSTEM, SERVING IN PARTICULAR AS A HOLDING AND SAFETY BRAKE
FREIN À MÂCHOIRES POUR UNE INSTALLATION D'ASCENSEUR, SERVANT EN PARTICULIER DE FREIN DE MAINTIEN ET DE SÉCURITÉ

(30) Priorität: 28.03.2018 EP 18164470
(43) Veröffentlichungstag der Anmeldung: 17.02.2021
(73) Patentinhaber: INVENTIO AG, 6052 Hergiswil (CH)
(72) Erfinder: HUSMANN, Josef, 6006 Luzern (CH)
(74) Vertreter: Inventio AG
(86) Internationale Anmeldenummer: PCT/EP2019/057486
(87) Internationale Veröffentlichungsnummer: WO 2019/185569

(56) Entgegenhaltungen:
- WO-A1-2012/110273
- WO-A1-2015/058663
- US-A- 4 592 451
- US-A1- 2016 355 377
- US-A1- 2017 036 888

## Beschreibung

Die Erfindung betrifft eine Zangenbremse für eine Aufzugsanlage. Die Aufzugsanlage kann hierbei eine oder mehrere Aufzugskabinen umfassen. Speziell eignet sich die Erfindung für eine Aufzugsanlage mit mehreren Aufzugskabinen, die vorzugsweise einzeln verfahrbar sind. Insbesondere betrifft die Erfindung eine Zangenbremse für eine Aufzugsanlage, wobei die Zangenbremse als Haltebremse und gleichzeitig als Sicherheitsbremse dient.

Bei einer Aufzugsanlage können ein oder mehrere Zangenbremsen zum Einsatz kommen. Wenn die Zangenbremse als Haltebremse dient, dann kann diese beispielsweise die Aufzugskabine bei einem Halt in einer Etage festhalten, so dass insbesondere ein sicheres Ein- und Aussteigen möglich ist. Hierzu wird die Zangenbremse bei einem Halt so angesteuert, dass die Zangenbremse zunächst schliesst und später wieder geöffnet wird. Wenn die Zangenbremse als Sicherheitsbremse dient, dann kann diese beispielsweise bei einem auftretenden Fehler oder bei einem Notfall die Aufzugskabine abbremsen und im Aufzugsschacht sichern. Wenn die Zangenbremse sowohl als Haltebremse als auch als Sicherheitsbremse dient, dann können die Haltefunktion und die Sicherheitsfunktion für eine Aufzugskabine durch eine einzige Zangenbremse realisiert werden.

Aus der WO 2015/090726 A1 ist eine Zangenbremse für Aufzugseinrichtungen bekannt. Die bekannte Zangenbremse weist zwei Bremszangen auf, die an einem Ende jeweils mit Bremsbelägen und am anderen Ende an Anlenkpunkten mit einem Kraftangriffspunkt verbunden sind. Für jede der Bremszangen ist zwischen ihrem Bremsbelag und ihrem Anlenkpunkt ein Angelpunkt vorgesehen, der jeweils fest mit einem Bremsgehäuse verbunden ist. Die jeweilige Bremszange ist in eine Bereitschaftsposition und in eine Bremsposition schwenkbar. Ein sich von dem Bremsbelag zu dem Anlenkpunkt erstreckender Bremsarm der jeweiligen Bremszange ist jeweils vorzugsweise als Blattfeder ausgeführt.

Aus der EP 1 067 084 A1 ist eine Kabinen-Bremsvorrichtung für einen Personen- oder Lastenaufzug bekannt. Die bekannte Kabinen-Bremsvorrichtung besteht aus einem quaderförmigen Gehäuse, einem darin fixierten Bremszangensupport mit zwei Bremszangengelenkbolzen, den Bremszangen und Bremsbelagträger, den Bremsbelägen, einem Kniehebelmechanismus, einem als Hubspindelmotor ausgeführten Hubmechanismus sowie einer Druckfeder. Die Haltewirkung der bekannten Kabinen-Bremsvorrichtung wird dadurch erreicht, dass die Druckfeder über dem Kniehebelmechanismus die Antriebshebel der um die Bremszangen-Gelenkbolzen schwenkbaren Bremszangen spreizt und damit deren bremsseitige Hebel mit den Bremsbelägen gegen Laufflächen der Führungsschiene presst. Gelöst wird die Kabinen-Bremsvorrichtung dadurch, dass der steuerbare Hubmechanismus die Vorspannkraft der Druckfeder überwindet, den Kniehebelmechanismus in geknickte Stellung bringt, dadurch die Bremszangen entlastet und die Bremsbeläge in ausreichendem Abstand zur Führungsschiene bewegt.

Aus US 2016 355377 und US 2017 036888 sind weitere Zangenbremsen für Aufzugseinrichtungen bekannt.

Aufgabe der Erfindung ist es, eine Zangenbremse anzugeben, die eine verbesserte Funktionsweise ermöglicht. Speziell kann sich hierbei die Aufgabe stellen, eine Zangenbremse anzugeben, die ein verbessertes Ansprechverhalten, insbesondere eine kurze Schliesszeit, ermöglicht. Insbesondere kann hierdurch die Möglichkeit geschaffen werden, eine Schliesszeit im Notfall kleinstmöglich zu halten. Ferner ist es eine Aufgabe der Erfindung, eine Aufzugsanlage mit solch einer Zangenbremse anzugeben.

Im Folgenden sind Lösungen und Vorschläge für eine entsprechende Ausgestaltung angegeben, die eine Zangenbremse und eine Aufzugsanlage mit einer Zangenbremse betreffen und zumindest Teile der gestellten Aufgabe lösen. Des Weiteren sind vorteilhafte ergänzende oder alternative Weiterbildungen und Ausgestaltungen angegeben beziehungsweise beschrieben.

Bei einer Lösung kann eine Zangenbremse für eine Aufzugsanlage angegeben werden, die insbesondere als Halte- und Sicherheitsbremse dient, wobei ein erster Bremshebel und ein zweiter Bremshebel vorgesehen sind, wobei eine erste Bremsbacke an einem bremsbackenseitigen Ende des ersten Bremshebels angebracht ist, wobei eine zweite Bremsbacke an einem bremsbackenseitigen Ende des zweiten Bremshebels angebracht ist, wobei der erste Bremshebel an einem ersten Lagerpunkt gelagert ist, wobei der zweite Bremshebel an einem zweiten Lagerpunkt gelagert ist, wobei die erste Bremsbacke und die zweite Bremsbacke mittels des ersten Bremshebels und des zweiten Bremshebels entlang einer Betätigungsachse gegeneinander verstellbar sind, wobei zumindest ein Zugelement vorgesehen ist, das zumindest näherungsweise parallel zu der Betätigungsachse verstellbar ist. Dabei bleibt ein entlang der Betätigungsachse betrachteter Abstand zwischen dem ersten Zugelementlagerpunkt und dem zweiten Zugelementlagerpunkt, der durch das Zugelement vorgegeben ist, konstant. Der erste Bremshebel ist zwischen seinem bremsbackenseitigen Ende und dem ersten Lagerpunkt an einem ersten Zugelementlagerpunkt mit dem Zugelement verbunden und der zweite Bremshebel ist zwischen seinem bremsbackenseitigen Ende und dem zweiten Lagerpunkt an einem zweiten Zugelementlagerpunkt mit dem Zugelement verbunden.

Bei der Zangenbremse für eine Aufzugsanlage kann ein Hubspindelantrieb vorgesehen sein, durch den der erste Bremshebel und der zweite Bremshebel zum Ändern eines entlang der Betätigungsachse betrachteten Abstands zwischen der ersten Bremsbacke und der zweiten Bremsbacke gegeneinander verstellbar sind, wobei zumindest eine Schliessfeder vorgesehen ist, die zum Verringern des Abstands zwischen der ersten Bremsbacke und der zweiten Bremsbacke zumindest mittelbar den ersten Bremshebel und den zweiten Bremshebel gegeneinander verstellt, und wobei der Hubspindelantrieb zum Vergrössern des Abstands zwischen der ersten Bremsbacke und der zweiten Bremsbacke der Schliessfeder entgegenwirkt.

Das Zugelement kann auf geeignete Weise ausgestaltet sein. Prinzipiell ist es denkbar, dass das Zugelement eine gemeinsame Drehachse sowohl für den ersten Bremshebel als auch für den zweiten Bremshebel vorgibt, wobei das Zugelement und somit auch solch eine Achse zumindest näherungsweise parallel zu der Betätigungsachse verstellbar ist. Vorzugsweise ist das Zugelement jedoch als Zuglasche ausgebildet, wobei in vorteilhafter Weise von einander getrennte Drehachsen für den ersten Bremshebel und den zweiten Bremshebel vorgegeben sind. Vorzugsweise fallen daher der erste Zugelementlagerpunkt und der zweite Zugelementlagerpunkt nicht zusammen. Durch die Zuglasche wird ein Abstand zwischen dem ersten Zugelementlagerpunkt und dem zweiten Zugelementlagerpunkt entlang der Betätigungsachse betrachtet, also in der durch die Betätigungsachse gegebenen Raumdimension, vorgegeben. In den anderen beiden Raumdimensionen, die senkrecht zu der Betätigungsachse sind, sind vorzugsweise keine Abstände zwischen dem ersten Zugelementlagerpunkt und dem zweiten Zugelementlagerpunkt vorgegeben. Die Zuglasche wird bei einer Betätigung der Zangenbremse im Betrieb parallel zu der Betätigungsachse verstellt, wobei ein entlang der Betätigungsachse betrachteter Abstand zwischen dem ersten Zugelementlagerpunkt und dem zweiten Zugelementlagerpunkt, der durch die Zuglasche vorgegeben ist, konstant bleibt. Der erste Zugelementlagerpunkt ist dann als erster Zuglaschenlagerpunkt, der durch die Zuglasche vorgegeben ist, ausgebildet, und der zweite Zugelementlagerpunkt ist dann als zweiter Zuglaschenlagerpunkt, der durch die Zuglasche vorgegeben ist, ausgebildet. Somit kann eine schwimmende Lagerung realisiert werden, bei der ein kleines Lüftungsspiel für jede der Bremsbacken realisiert werden kann. Dadurch wird ein schnelles Schliessen der Bremse ermöglicht, ohne dass es im geöffneten Zustand zu einem Schleifen kommt.

Vorteilhaft ist es, dass eine Schliessfeder vorgesehen ist, die zum Verringern eines entlang der Betätigungsachse betrachteten Abstands zwischen der ersten Bremsbacke und der zweiten Bremsbacke zumindest mittelbar den ersten Bremshebel und den zweiten Bremshebel gegeneinander verstellt, und dass die Schliessfeder zwischen dem ersten Bremshebel und dem zweiten Bremshebel angeordnet ist. Solch eine Anordnung kann insbesondere durch die Ausgestaltung des zumindest einen Zugelements als Zuglasche realisiert werden. In vorteilhafter Weise können hierbei auch zwei Zuglaschen vorgesehen sein. Die Bremshebel können dabei vorteilhafterweise zwischen einer oberen und einer unteren Zuglasche angeordnet werden. Damit sind die Zuglaschen im Wesentlichen von Biegekräften entlastet. Weiter können zwischen den beiden Zuglaschen auch die Schliessfeder und/oder eine Federhalterung für die Schliessfeder angeordnet sein. Durch die Anordnung der Schliessfeder und gegebenenfalls auch einer Federhalterung zwischen dem ersten Bremshebel und dem zweiten Bremshebel ergeben sich ein kompakter Aufbau und ausserdem Vorteile in Bezug auf die Wirkung der Federkraft der Schliessfeder.

Die Lösung umfasst auch, dass der erste Lagerpunkt ortsfest bezüglich einem Gehäuseteil angeordnet ist, dass ein Zwischenhebel vorgesehen ist, der an einem Zwischenhebellagerpunkt gelagert ist, dass der Zwischenhebellagerpunkt ortsfest bezüglich dem Gehäuseteil angeordnet ist, dass der zweite Bremshebel an dem zweiten Lagerpunkt an dem Zwischenhebel gelagert ist und dass der zweite Lagerpunkt bei einer Drehung des Zwischenhebels um den Zwischenhebellagerpunkt relativ zu dem Gehäuseteil verstellbar ist. Somit kann zum Öffnen und Schliessen der Zangenbremse über den Zwischenhebel zunächst der zweite Lagerpunkt relativ zu dem Gehäuseteil verstellt werden. Durch die schwimmende Lagerung ergibt sich hierbei ein vorteilhaftes Schliessen der Zangenbremse, bei dem die beiden Bremsbacken gegeneinander an Bremsbahnen gepresst werden, die vorzugsweise an einer geeigneten Schiene realisiert sind. Das Schliessen erfolgt hierbei über die Federkraft der Schliessfeder, so dass auch bei einem Ausfall des Motors eine Sicherheitsfunktion realisiert ist. Somit schliesst die Bremse bei einem Stromausfall und bleibt auch über einen langen Zeitraum geschlossen.

Ein massgebendes Element der schwimmenden Lagerung ist vorzugsweise durch das im Gehäuse gelagerte Zugelement, beziehungsweise die Zuglasche gebildet. Das Zugelement ist hierbei gleitend im Gehäuse angeordnet. In einer Ausführung können Bremskräfte, die durch das Andrücken der Bremsbacken an die Bremsbahn entstehen über das Zugelement in das Gehäuse eingeleitet werden. Durch diese Art der schwimmenden Lagerung, bei der die Bremshebel an dem der Bremsbake abgewandten Ende im Gehäuse gelagert sind und die Zugelementlagerpunkte zum Gehäuse schwimmend ausgeführt sind, können Querkräfte, die zum Nachführen der Bremsbacken in geringer Distanz zu den Bremsbahnen erforderlich sind, geringgehalten werden.

Somit ist es auch vorteilhaft, dass die Schliessfeder, die zum Verringern eines entlang der Betätigungsachse betrachteten Abstands zwischen der ersten Bremsbacke und der zweiten Bremsbacke zumindest mittelbar den ersten Bremshebel und den zweiten Bremshebel gegeneinander verstellt, den Zwischenhebel zumindest mittelbar mit einer Schliesskraft beaufschlagt. Wenn eine mittelbare Beaufschlagung realisiert ist, dann kann diese in vorteilhafter Weise über eine Federhalterung realisiert werden. Hierbei ist es vorteilhaft, dass die Federhalterung so ausgebildet ist, dass der Zwischenhebel selbst bei einem Federbruch noch mit einer ausreichend hohen Schliesskraft beaufschlagt ist, und dass die Federhalterung einerseits an einem Gehäuse der Zangenbremse abgestützt und andererseits mit dem Zwischenhebel verbunden ist. Bei einem Federbruch, das heisst bei Ausfall einer Windung der Feder, können beispielsweise etwa 75 % der Bremskraft verbleiben. Die Schliessfeder kann beispielsweise auf etwa 75 % der Maximalkraft vorgespannt sein, damit die Bremskraft konstant bleibt und eine hohe Lebensdauer vorhanden ist.

Vorteilhaft ist es, dass die erste Bremsbacke um zumindest eine Achse drehbar an dem bremsbackenseitigen Ende des ersten Bremshebels angebracht ist. Zusätzlich oder alternativ ist es vorteilhaft, dass die zweite Bremsbacke um zumindest eine Achse drehbar an dem bremsbackenseitigen Ende des zweiten Bremshebels angebracht ist. Es ist allerdings auch eine andere Lagerung denkbar, die eine Ausrichtung der Bremsbacken in Bezug auf die Bremsbahnen ermöglicht.

Die Grösse des Lüftungsspiels wirkt sich auf das Ansprechverhalten der Zangenbremse aus. Ein grösseres Lüftungsspiel bedingt hierbei einen grösseren Weg, über den die Bremsbacken bewegt werden müssen, bis diese an ihren Bremsbahnen anliegen und dann die Bremswirkung aufgebaut werden kann. Bei schnell fahrenden Kabinen von herkömmlichen Aufzugsanlagen können grosse Lüftungsspiele, beispielsweise bis zu 7 mm, notwendig sein, damit die Bremse während der Fahrt nicht streift. Zwar ist es denkbar, dass Bremsen mit kleinem Lüftungsspiel beweglich an der Kabine befestigt werden und separat auf der Schiene geführt werden, der diesbezügliche Aufwand ist aber gross und es hat sich gezeigt, dass dennoch ein Streifen der Bremse nicht zuverlässig verhindert wird.

Eine vorteilhafte Verringerung des Lüftungsspiels ist demgegenüber durch eine Führung der Bremsbacken an ihren Bremsbahnen möglich. Hierbei können geeignete elastische Elemente vorgesehen sein, die bei offener Bremse vorgespannt sind, damit eine gute Führung erfolgt. Speziell ist es vorteilhaft, dass solche Vorspannelemente als Vorspannrollen ausgestaltet sind. Somit ist es vorteilhaft, dass zumindest eine Vorspannrolle für die erste Bremsbacke vorgesehen ist, die im Betrieb in einem geöffneten Zustand ein Lüftungsspiel zwischen der ersten Bremsbacke und einer Bremsbahn für die erste Bremsbacke gewährleistet, und/oder dass zumindest eine Vorspannrolle für die zweite Bremsbacke vorgesehen ist, die im Betrieb in einem geöffneten Zustand ein Lüftungsspiel zwischen der zweiten Bremsbacke und einer Bremsbahn für die zweite Bremsbacke gewährleistet. Hierbei ist es insbesondere von Vorteil, wenn die Vorspannrolle für die erste Bremsbacke einen elastischen Rollenbelag aufweist und dass im Betrieb im geöffneten Zustand der elastische Rollenbelag gegenüber der Bremsbahn für die erste Bremsbacke vorgespannt ist. Ferner ist es vorteilhaft, dass die Vorspannrolle für die zweite Bremsbacke einen elastischen Rollenbelag aufweist und dass im Betrieb im geöffneten Zustand der elastische Rollenbelag gegenüber der Bremsbahn für die zweite Bremsbacke vorgespannt ist. Dadurch wird ein Streifen verhindert und eine gute Führung ermöglicht. Speziell kann ein Lüftungsspiel von etwa 0,25 mm zur Schiene an jeder der Bremsbacken realisiert werden, wenn die Zangenbremse geöffnet ist. Hierbei wirkt sich wiederum vorteilhaft aus, dass die Querkräfte zum Nachführen der Bremsbacken im geringen Abstand zur Bremsbahn geringgehalten werden können.

Vorteilhaft ist es, dass der Hubspindelantrieb einen Motor und eine Gewindespindel aufweist, dass der Motor über die Gewindespindel zumindest mittelbar auf den ersten Bremshebel und den zweiten Bremshebel einwirkt, wenn der Motor zum Vergrössern des Abstands zwischen der ersten Bremsbacke und der zweiten Bremsbacke der Schliessfeder entgegenwirkt, und dass die Gewindespindel so ausgebildet ist, dass an der Gewindespindel keine Selbsthemmung auftritt. Der Motor kann hierbei drehbar am Gehäuse gelagert werden. Die Gewindespindel kann mit dem Zwischenhebel verbunden werden. Speziell ist es vorteilhaft, wenn die Gewindespindel als Kugelgewindespindel ausgebildet ist. Eine Kugelgewindemutter der Kugelgewindespindel kann dann drehbar mit dem Zwischenhebel verbunden sein. Das Gewinde der Gewindespindel weist eine genügend hohe Steigung auf, damit sicher keine Selbsthemmung eintritt. Die Federkraft der Schliessfeder, eine sich ergebende Hebelübersetzung und die Gewindesteigung der Gewindespindel bestimmen die Motorgrösse, welche vorzugsweise möglichst klein gewählt ist. Der Motor treibt die Gewindespindel an, um die Bremse zu öffnen. Bei einer Abschaltung des Motors kann somit die Schliessfeder, wegen der fehlenden Selbsthemmung, den Abstand zwischen der ersten Bremsbacke und der zweiten Bremsbacke verringern, um diese an die Bremsbahn anzudrücken.

In vorteilhafter Weise kann der Motor somit mittels der Gewindespindel auf den Zwischenhebel einwirken, wenn der Motor zum Vergrössern des Abstands zwischen der ersten Bremsbacke und der zweiten Bremsbacke der Schliessfeder entgegenwirkt. Hierbei kann die Schliessfeder einerseits zumindest mittelbar an dem Gehäuse abgestützt und andererseits zumindest mittelbar mit dem Zwischenhebel verbunden sein, wie es beispielsweise mittels der Federhalterung ermöglicht ist.

Bei einer möglichen Ausgestaltung kann die Gewindespindel durch einen linearen Freilauf mit dem Zwischenhebel verbunden sein. Speziell bei dieser Ausgestaltung kann somit der Motor primär durch Reibung gebremst werden. Dies stellt eine Möglichkeit dar, um ein abruptes Bremsen des Motors zu verhindern, bei der die Entkopplung der Gewindemutter vom Zwischenhebel durch den linearen Freilauf und ein Bremsen des Motors primär durch Reibung erfolgt.

Vorteilhaft ist es auch, dass der Motor mittels eines Freilaufs oder mittels einer schaltbaren Kupplung mit der Gewindespindel verbunden ist. Beim Schliessen der Bremse kann der Motor ausgeschaltet und von der Schliessfeder über den Zwischenhebel und die Gewindespindel angetrieben werden, wobei die Bremse geschlossen wird. Wenn die Bremse zu ist, dann wird die Gewindespindel abrupt abgebremst und der Motor durch den Freilauf abgekoppelt. Wegen seiner Trägheit kann der Motor weiterlaufen und dann durch Reibung abgebremst werden. Anstelle des Freilaufs kann auch eine schaltbare Kupplung zwischen dem Motor und der Gewindespindel angeordnet werden. Durch diese Lösung kann gegebenenfalls eine kürzere Schliesszeit erreicht werden.

Da das Öffnen der Zangenbremse gegebenenfalls nur Sekundenbruchteile dauert, kann das Nennmoment des Motors gegebenenfalls auch deutlich überschritten werden. Beim Offenhalten der Bremse ist ein gewisses Drehmoment erforderlich. Bei einer möglichen Ausgestaltung wird der Motor so bemessen, dass er dieses erforderliche Drehmoment dauerhaft aufbringen kann und somit die Zangenbremse dauerhaft offenhalten kann. Bei einer weiteren vorteilhaften Ausgestaltung ist es auch möglich, dass eine Haltebremse für den Motor vorgesehen ist, mittels der der Motor im Betrieb in einem geöffneten Zustand der Zangenbremse zumindest teilweise entlastet ist. Speziell kann bei aktivierter Haltebremse der Motor vollständig entlastet sein.

Vorteilhaft ist es, wenn der Hubspindelantrieb so ausgebildet ist, dass ein Nachstellen des Abstands zwischen der ersten Bremsbacke und der zweiten Bremsbacke bei einem Verschleiss von Bremsbelägen der ersten Bremsbacke und der zweiten Bremsbacke erfolgt, und dass der Hubspindelantrieb zumindest mittelbar einen Verschleissanzeigeschalter betätigt, wenn ein vorgegebener Verschleiss der Bremsbeläge erreicht ist. Mit dem Verschleiss kann sich eine absolute Drehposition der Gewindespindel verschieben. Über den Verschleissanzeigeschalter ist eine Überwachung des Verschleisses möglich. Wenn der vorgegebene Verschleiss der Bremsbeläge erreicht ist, dann kann der Aufzug stillgelegt oder ein entsprechender Service angefordert werden.

Zum Öffnen der Bremse kann der Motor eine bestimmte Anzahl an Umdrehungen ausführen und dann stillstehen. Auf diese Weise kann immer das gleich Lüftungsspiel an den Bremsbacken erreicht werden. Vorteilhaft ist es somit, dass der Hubspindelantrieb so ausgebildet ist, dass ein Vergrössern des Abstands zwischen der ersten Bremsbacke und der zweiten Bremsbacke aus einem geschlossenen Zustand in einen geöffneten Zustand zumindest näherungsweise mit einer vorgegebenen Anzahl an Umdrehungen erfolgt. Diese Anzahl an Umdrehungen kann, muss aber nicht notwendigerweise ganzzahlig sein.

Je nach Ausgestaltung und Anwendungsfall kann die Zangenbremse somit eine Sicherheits- und eine Haltefunktion übernehmen. Dies bedeutet, dass eine vollbeladene Aufzugskabine bei Übergeschwindigkeit zum Stillstand gebracht werden kann. Um die Ausfallwahrscheinlichkeit eines Bremssystems für die Aufzugskabine genügend klein zu halten, bringen beim Ausfall einer Bremse die verbleibenden Bremsen die Aufzugskabine zum Stillstand. Bei solch einer Ausgestaltung können mehrere Bremsen an der Aufzugskabine vorgesehen sein, von denen zumindest eine entsprechend einer vorgeschlagenen Ausführung ausgestaltet ist.

Durch eine geeignete Ausgestaltung der Zangenbremse ist es möglich, Schliess- und Öffnungszeiten im Bereich von 0,1 bis 0,3 Sekunden zu realisieren. Hierbei wird auch bei einem geringen Lüftungsspiel ermöglicht, dass während der Fahrt kein Streifen der Bremse auftritt. Ferner können beim Schliessen und Öffnen Geräusche soweit begrenzt werden, dass diese nicht grösser als 60 dBA betragen. Des Weiteren kann eine Masse (Gewicht) der Bremse nicht grösser als 10 kg betragen, wenn eine Bremskraft von 10 kN vorgegeben ist. Ferner kann eine Bremse realisiert werden, mit der 10 Millionen Bremszyklen durchgeführt werden können. Bremsbeläge der Bremsbacken können so ausgeführt werden, dass ein Wechsel frühestens nach 2.000 dynamischen Bremsungen erforderlich ist.

Speziell kann die Zangenbremse als Bremse bei selbstfahrenden Aufzugskabinen oder bei Aufzugskabinen, die vom Tragmittel entkoppelt werden können, dienen, wobei die Zangenbremse an der Aufzugskabine angeordnet ist. Auch bei anderen Aufzugsanlagen, die mit Seil oder Riemen als Tragmittel arbeiten, kann solch eine Zangenbremse direkt an der Aufzugskabine befestigt werden, um beispielsweise beim Beladen ein Absinken zu verhindern und/oder um Tragmittel und Antrieb von Sicherheitsfunktionen zu entlasten.

Bevorzugte Ausführungsbeispiel der Erfindung sind in der nachfolgenden Beschreibung anhand der beigefügten Zeichnungen näher erläutert.
Fig. 1 zeigt eine schematische Darstellung einer Aufzugsanlage gemäss einer möglichen Ausgestaltung der Erfindung.
Fig. 2 zeigt eine schematische Darstellung einer Zangenbremse für die in Fig. 1 dargestellte Aufzugsanlage entsprechend einem ersten Ausführungsbeispiel der Erfindung.
Fig. 3 zeigt eine schematische, räumliche Darstellung der in Fig. 2 dargestellten Zangenbremse entsprechend dem ersten Ausführungsbeispiel.
Fig. 4 zeigt eine schematische, auszugsweise Darstellung der in Fig. 2 dargestellten Zangenbremse entsprechend dem ersten Ausführungsbeispiel im Bereich der der Schiene 5 aus der mit IV bezeichneten Blickrichtung.
Fig. 5 zeigt einen Hubspindelantrieb für die in Fig 2 dargestellte Zangenbremse gemäss einem zweiten Ausführungsbeispiel der Erfindung.

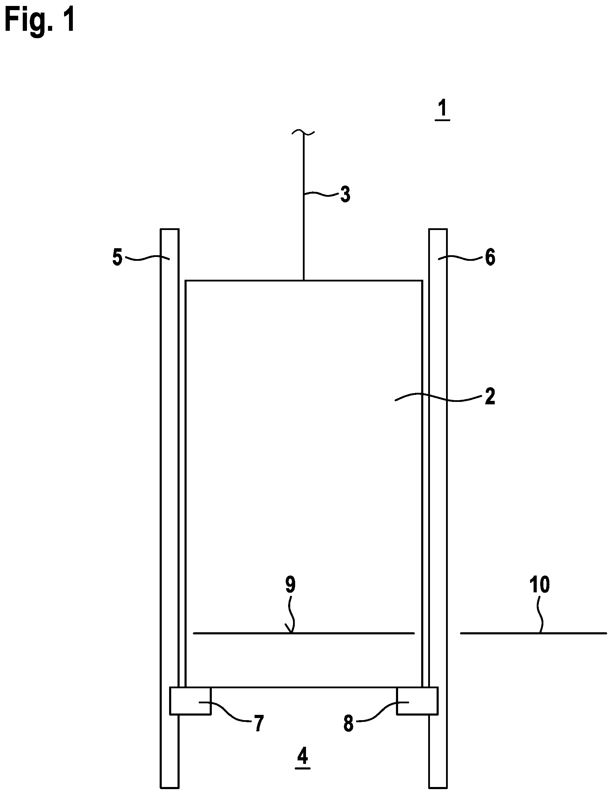

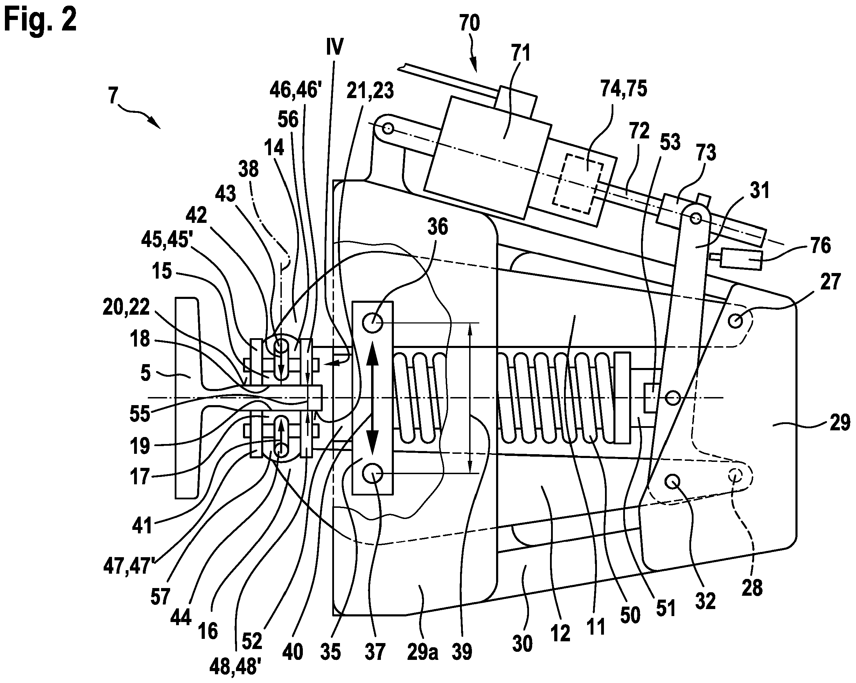

Fig. 1 zeigt eine schematische Darstellung einer Aufzugsanlage 1 gemäss einer möglichen Ausgestaltung der Erfindung. Die Aufzugsanlage 1 weist eine Aufzugskabine 2 auf, die an einem geeigneten Tragmittel 3 in einem Aufzugsschacht 4 verfahrbar ist. In dem Aufzugsschacht 4 sind ausserdem Schienen 5, 6 angeordnet. Die Schienen 5, 6 dienen zumindest als Bremsschienen 5, 6. Die Schienen 5,6 können zusätzlich auch als Führungsschienen 5, 6 dienen. An der Aufzugskabine 2 sind Bremsen 7, 8 angeordnet. Hierbei wirkt die Bremse 7 mit der Schiene 5 zusammen. Die Bremse 8 wirkt mit der Schiene 6 zusammen. Zumindest eine der Bremsen 7, 8 ist als Zangenbremse 7, 8 ausgebildet. Im Folgenden sind anhand der Fig. 2 bis 5 mögliche Ausgestaltungen der Bremse 7 als Zangenbremse 7 dargestellt und beschrieben. Die Bremse 8 kann in entsprechender Weise als Zangenbremse 8 ausgestaltet sein. Ferner kann die Schiene 6 entsprechend der Schiene 5 ausgestaltet sein.

Die Bremsen 7, 8 können in vorteilhafter Weise als Haltebremsen 7, 8 dienen. Beispielsweise kann die Aufzugskabine 2 an einem Stockwerk halten, wobei ein Boden 9 der Aufzugskabine 2 auf einer schematisch dargestellten Ausstiegshöhe 10 ausgerichtet sein soll. Da sich beim Ein- und Ausladen beziehungsweise Ein- und Aussteigen die Lastverhältnisse an der Aufzugskabine 2 ändern, ist es nach dem Ausrichten des Bodens 9 an der Ausstiegshöhe 10 vorteilhaft, wenn die Bremsen 7, 8 geschlossen werden, während das Ein- und Ausladen beziehungsweise Ein- und Aussteigen erfolgt. Ferner können die Bremsen 7, 8 zusätzlich auch als Sicherheitsbremsen 7, 8 dienen, die bei einer Fehlfunktion und auch bei einem Stromausfall die Aufzugskabine 2 im Aufzugsschacht 4 zuverlässig sichern.

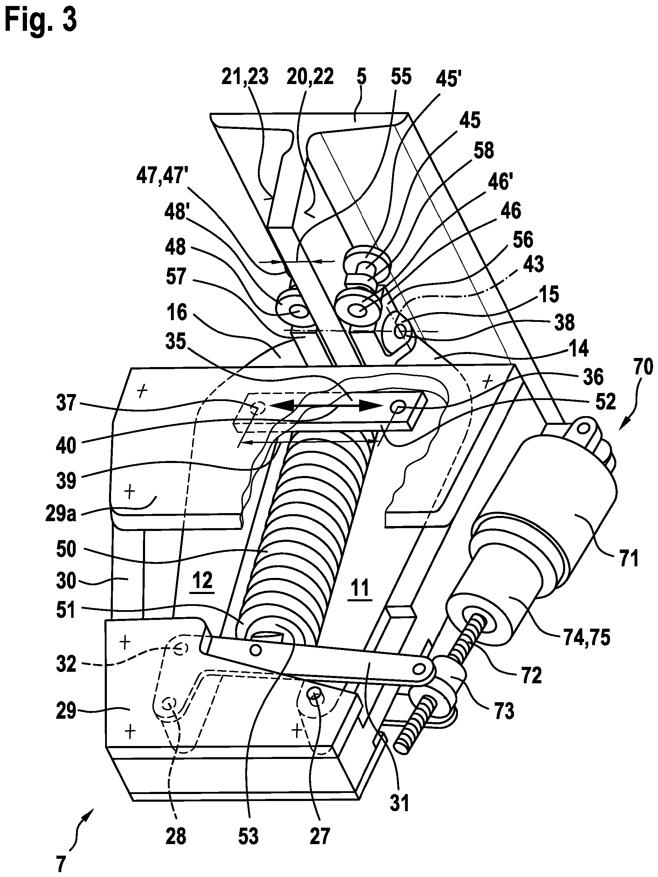

Fig. 2 zeigt eine schematische Darstellung der Zangenbremse 7 für die in Fig. 1 dargestellte Aufzugsanlage 1 entsprechend einem ersten Ausführungsbeispiel der Erfindung. Ferner zeigt Fig. 3 eine schematische, räumliche Darstellung der in Fig. 2 dargestellten Zangenbremse 7 entsprechend dem ersten Ausführungsbeispiel. In den Fig. 2 und 3 ist ausserdem die Schiene 5 dargestellt, die fest im Aufzugsschacht 4 angeordnet ist. Während der Fahrt der Aufzugskabine 2 bewegt sich die an der Aufzugskabine 2 angeordnete Zangenbremse 7 mit der Aufzugskabine 2 durch den Aufzugsschacht 4 und somit relativ zu der Schiene 5.

Die Zangenbremse 7 weist einen ersten Bremshebel 11 und einen zweiten Bremshebel 12 auf. An einem bremsbackenseitigen Ende 14 des ersten Bremshebels 11 ist eine erste Bremsbacke 15 angebracht. An einem bremsbackenseitigen Ende 16 des zweiten Bremshebels 12 ist eine zweite Bremsbacke 17 angebracht. An der ersten Bremsbacke 15 ist ein Bremsbelag 18 vorgesehen. An der zweiten Bremsbacke 17 ist ein Bremsbelag 19 vorgesehen. Im montierten Zustand ist der Bremsbelag 18 der ersten Bremsbacke 15 einer als Bremsbahn dienenden Bahn 20 der Schiene 5 zugeordnet. Der Bremsbelag 19 der zweiten Bremsbacke 17 ist einer als Bremsbahn 21 dienenden Bahn 21 der Schiene 5 zugeordnet. Die Bremsbahnen 20, 21 befinden sich hierbei an voneinander abgewandten Seiten 22, 23 der Schiene 5. Die Bahnen 20, 21 können zusätzlich auch als Führungsbahnen 20, 21 dienen, um über geeignete Aufzugskabinen-Führungsrollen (nicht dargestellt) eine Führung der Aufzugskabine 2 im Aufzugsschacht 4 zu gewährleisten.

Der erste Bremshebel 11 ist an einem ersten Lagerpunkt 27 drehbar gelagert. Der zweite Bremshebel 12 ist bezüglich einem zweiten Lagerpunkt 28 drehbar gelagert. Der erste Lagerpunkt 27 ist bezüglich einem hinteren Gehäuseteil 29 eines Gehäuses 30 oder des Gehäuses 30 selbst ortsfest angeordnet. Ferner ist ein Zwischenhebel 31 vorgesehen, der an einem Zwischenhebellagerpunkt 32 ortsfest bezüglich dem hinteren Gehäuseteil 29 oder dem Gehäuse 30 angeordnet ist. Der zweite Bremshebel 12 ist an dem zweiten Lagerpunkt 28 an dem Zwischenhebel 31 gelagert. Hierbei ist die Lagerung des Zwischenhebels 31 an dem Zwischenhebellagerpunkt 32, die bezüglich des Gehäuses 30 erfolgt, so ausgeführt, dass die Lagerung des zweiten Bremshebels 12 an dem zweiten Lagerpunkt 28 nicht beeinträchtigt ist. Wenn der Zwischenhebel 31 um den Zwischenhebellagerpunkt 32 relativ zu dem Gehäuse 30 gedreht wird, dann wird der zweite Lagerpunkt 28 relativ zu dem Gehäuse 30 oder dem hinteren Gehäuseteil 29 verstellt. Der hintere Gehäuseteil 29 ist ein oberer Teil des Gehäuses 30. Er ist beispielsweise nach der Montage der Bremshebel 11, 12, des Zwischenhebels 31 sowie allenfalls weiterer erforderlicher Montageelemente zum Gehäuse 30 verschraubt.

Die Bremshebel 11, 12 sind über ein Zugelement 35 miteinander verbunden. Hierfür ist der erste Bremshebel 11 an einem ersten Zugelementlagerpunkt 36 mit dem Zugelement 35 verbunden. In den Figuren 2 und 3 ist das Gehäuse 30 beziehungsweise eine vorderer Gehäuseteil 29a teilweise ausgebrochen dargestellt, um die Anordnung des Zugelements 35 besser darstellen zu können. Der vordere Gehäuseteil 29a ist ein oberer Teil des Gehäuses 30 im vorderen Bremsenteil. Je nach Einbaulage der Zangenbremse 7 an der Aufzugskabine können die oberen Teile natürlich auch unten sein. Der zweite Bremshebel 12 ist an einem zweiten Zugelementlagerpunkt 37 mit dem Zugelement 35 verbunden. Die Zugelementlagerpunkte 36, 37 sind in diesem Ausführungsbeispiel als Zuglaschenlagerpunkte 36, 37 ausgeführt, die an dem als Zuglasche 35 ausgebildeten Zugelement 35 vorgesehen und voneinander beabstandet sind.

In entsprechender Weise kann ein weiters Zugelement, insbesondere eine weitere Zuglasche, vorgesehen sein, das - beziehungsweise die - insbesondere unterhalb der Bremshebel angeordnet ist.

Mittels der Bremshebel 11, 12 sind die erste Bremsbacke 15 und die zweite Bremsbacke 17 entlang einer Betätigungsachse 38 gegeneinander verstellbar. Hierbei sind die Bremshebel 11, 12 über die Zuglasche 35 zumindest näherungsweise parallel zu der Betätigungsachse 38 in dem Gehäuse 30 schwimmend gelagert. Die als Zuglaschenlagerpunkte 36, 37 ausgebildeten Zugelementlagerpunkte 36, 37 sind parallel zu der Betätigungsachse 38 betrachtet um einen Abstand 39 voneinander beabstandet. Wenn sich im Betrieb aufgrund der schwimmenden Lagerung eine Verschiebung der Zuglasche 35 parallel zu der Betätigungsachse 38 ergibt, wie es durch den Doppelpfeil 40 veranschaulicht ist, dann bleibt der Abstand 39 dennoch konstant. Somit wird über das als Zuglasche 35 ausgebildete Zugelement 35 eine gelenkige Verbindung der Bremshebel 11, 12 ermöglicht, so dass die Bremshebel 11, 12 Presskräfte 41, 42 auf die Bremsbacken 15, 17 gegen die Bremsbahnen 20, 21 der Schiene 5 ausüben können.

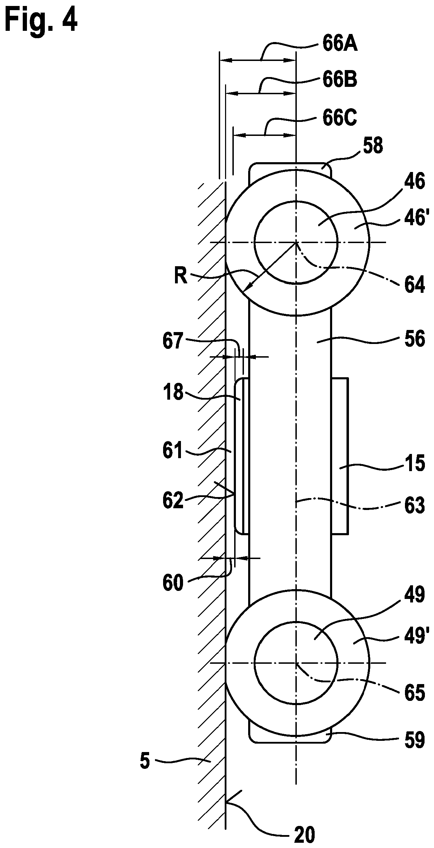

Die Bremsbacken 15, 17 sind drehbar um Achsen 43, 44 auf den Bremshebeln 11, 12 gelagert. Die Achsen 43, 44 sind hierbei parallel zueinander angeordnet. Bei geöffneter Zangenbremse 7 ist zwischen jedem der Bremsbeläge 18, 19 der Bremsbacken 15, 17 und der zugeordneten Bremsbahn 20, 21 ein Lüftungsspiel 60 (Fig. 4) von vorzugsweise etwa 0,25 mm eingestellt. Damit die Bremsbacken 15, 17 nicht streifen, wenn die Aufzugskabine 2 durch den Aufzugsschacht 4 fährt, sind Vorspannrollen 45 bis 49 mit elastischen Rollenbelägen 45' bis 49' vorgesehen. Die Vorspannrollen 45, 46, 49 führen die erste Bremsbacke 15. Die Vorspannrollen 47, 48 führen die zweite Bremsbacke 17. Bei offener Zangenbremse 7 sind die Rollenbeläge 45' bis 49' der Vorspannrollen 45 bis 49 leicht vorgespannt, damit eine gute Führung erfolgt.

In diesem Ausführungsbeispiel sind für jede der Bremsbacken 15, 17 vier Vorspannrollen 45 bis 49 vorgesehen, die an einem Führungskörper 56 für die erste Bremsbacke 15 beziehungsweise an einem Führungskörper 57 für die zweite Bremsbacke 17 drehbar gelagert sind, wobei nur die Vorspannrollen 45 bis 49 dargestellt sind.

Die Zangenbremse 7 wird mit einer als Druckfeder 50 ausgebildeten Schliessfeder 50 geschlossen. Die Schliessfeder 50 wird mit einer Federhalterung 51 geführt. Mittels der Federhalterung 51 ist die Schliessfeder 50 an einer Seite 52 an dem Gehäuse 30 abgestützt und an einer anderen Seite 53 mit dem Zwischenhebel 31 drehbar verbunden. Somit ist die Schliessfeder 50 am Gehäuse 30 gelagert und wirkt auf den Zwischenhebel 31. Die Schliessfeder 50 verstellt im Betrieb den ersten Bremshebel 11 und den zweiten Bremshebel 12 gegeneinander, um einen Abstand 55 zwischen den Bremsbelägen 18, 19 der Bremsbacken 15, 17 entlang der Betätigungsachse 38 zu verringern. Dadurch wird das jeweilige Lüftungsspiel 60 zwischen den Bremsbelägen 18, 19 und den Bremsbahnen 20, 21 aufgehoben und es kommt zum Greifen der Zangenbremse 7. Selbst bei einem Federbruch wird der Zwischenhebel 31 in diesem Ausführungsbeispiel noch mit einer ausreichend hohen Schliesskraft beaufschlagt, da die Schliessfeder 50 hierfür auf geeignete Weise von der Federhalterung 51 abgestützt wird.

Die Drehachsen bezüglich der Lagerpunkte 27, 28, des Zwischenhebellagerpunkts 32, der Zuglaschenlagerpunkte 36, 37 und der Achsen 43, 44 sind vorzugsweise zumindest näherungsweise parallel zueinander. Je nach Einbaulage der Zangenbremse 7 können diese im Betrieb beispielsweise vertikal orientiert sein.

Durch den Abstand 39 zwischen den Zuglaschenlagerpunkten 36, 37, die Länge der Zuglasche 35 und durch die Ausgestaltung der Bremshebel 11, 12 ist eine Anordnung der Schliessfeder 50 und der Federhalterung 51 zwischen den Bremshebeln 11, 12 ermöglicht. Der als erster Zuglaschenlagerpunkt 36 ausgebildete erste Zugelementlagerpunkt 36 befindet sich zwischen dem bremsbackenseitigen Ende 14 des ersten Bremshebels 11 und dem ersten Lagerpunkt 27 für den ersten Bremshebel 11. Entsprechend befindet sich der als zweiter Zuglaschenlagerpunkt 37 ausgebildete zweite Zugelementlagerpunkt 37 zwischen dem bremsbackenseitigen Ende 16 des zweiten Bremshebels 12 und dem zweiten Lagerpunkt 28 für den zweiten Bremshebel 12.

Durch die Ausgestaltung der Zangenbremse 7 kann beispielsweise bei seitlichen Verschiebungen der Aufzugskabine 2 ein vorteilhaftes Nachführen der bremsbackenseitigen Enden 14, 16 der Bremshebel 11, 12 bezüglich der Schiene 5 ermöglicht werden, wie es durch den Doppelpfeil 40 veranschaulicht ist. Der erste Lagerpunkt 27 und der Zwischenhebellagerpunkt 32 können hierbei ortsfest im Gehäuse 30 und somit ortsfest in Bezug auf die Aufzugskabine 2 sein. Damit können die als Führungselemente 45 bis 48 dienenden Vorspannrollen 45 bis 48 die Bremsbacken 15, 17 mit kleiner Kraft nahe der Schiene 5 führen. Damit kann eine Bremsreaktionszeit klein gehalten werden, da zum Schliessen jeweils nur ein kleiner Luftspalt 61 (Fig. 4) mit einem kleinen Lüftungsspiel 60 zu überwinden ist.

Wie es in Fig. 3 veranschaulicht ist, können die Vorspannrollen 45 bis 49 über die Führungskörper 56, 57 die Bremsbacken 15, 17 führen. Hierbei sind weitere Vorspannrollen (nicht dargestellt) vorgesehen, die ebenfalls an den Führungskörpern 56, 57 befestigt sind. Beispielsweise können zwei weitere Vorspannrollen 49 (Fig. 4) an einem von dem Ende 58 des Führungskörpers 56 abgewandten weiteren Ende 59 (Fig. 4) in entsprechender Weise an dem Führungskörper 56 gelagert sein. Eine entsprechende Ausgestaltung mit vier Vorspannrollen 47, 48 ist an dem Führungskörper 57 realisiert.

Fig. 4 zeigt eine schematische, auszugsweise Darstellung der in Fig. 2 dargestellten Zangenbremse 7 entsprechend dem ersten Ausführungsbeispiel im Bereich der der Schiene 5 aus der mit IV bezeichneten Blickrichtung. Hierbei ist zur Vereinfachung der Darstellung der Führungskörper 56 dargestellt, an dem vier Vorspannrollen 45, 46, 49 gelagert sind, von denen in der Fig. 4 die Vorspannrollen 46, 49 dargestellt sind. Ferner ist die Schiene 5 auszugsweise im Bereich ihrer Bremsbahn 20 dargestellt, an der in diesem Ausführungsbeispiel die Vorspannrollen 45, 46, 49 anliegen. Die an dem Führungskörper 56 gelagerten Vorspannrollen 45, 46, 49 rollen hierbei an der Bremsbahn 20 ab, wenn sich der Führungskörper 56 bei einer Bewegung der Aufzugskabine 2 (Fig. 1) durch den Aufzugschacht 4 entlang einer Längsachse 63 des Führungskörpers 56 bewegt. Ausserdem ist die von dem Führungskörper 56 gehaltene erste Bremsbacke 15 dargestellt, während zur Vereinfachung der Darstellung die Verbindung mit dem ersten Bremshebel 11 nicht gezeigt ist.

Die erste Bremsbacke 15 kann beispielsweise bei einer Erstmontage oder bei einer Wartung direkt oder mittelbar in dem Führungskörper 56 ortsfest fixiert werden. Hierbei ist die erste Bremsbacke 15 so in dem Führungskörper 56 montiert, dass der Bremsbelag 18 der ersten Bremsbacke 15 der Bremsbahn 20 zugewandt ist. eine Oberseite 62 des Bremsbelags 18 wird dabei vorzugsweise parallel zu der Bremsbahn 20 ausgerichtet.

In einem beispielsweise bei der Montage des Führungskörpers denkbaren Zustand, in dem die Vorspannrollen 45, 46, 49 noch nicht vorgespannt sind, aber an der Bremsbahn 20 anliegen, ergibt sich ein Abstand 66A zwischen der Bremsbahn 20 und der parallel zu der Bremsbahn 20 orientierten und durch die Drehachsen 64, 65 der Vorspannrollen verlaufenden Längsachse 63 des Führungskörpers 56. In diesem Ausführungsbeispiel, in dem die Vorspannung durch die elastischen Rollenbeläge 45', 46', 49' aufgebracht wird, ist der Abstand 66A gleich einem Radius R der Rollenbeläge 45', 46', 49'. Die Zangenbremse 7 wird so eingestellt, dass sich bei geöffneter Zangenbremse 7 ein gewünschtes Lüftungsspiel 60 ergibt und dass zugleich eine ausreichend grosse Vorspannung vorgegeben ist, die in diesem Ausführungsbeispiel durch eine Kompression der elastischen Rollenbeläge 45', 46', 49' an der Bremsbahn 20 erzeugt ist. Im montierten Zustand ergibt sich daher ein Abstand 66B zwischen der Längsachse 63 und der Bremsbahn 20, wenn die Zangenbremse 7 geöffnet ist. Der Abstand 66B ist kleiner als der Abstand 66A und somit in diesem Ausführungsbeispiel kleiner als der Radius R der Vorspannrollen 45, 46, 49 beziehungsweise der Rollenbeläge 45', 46', 49'. Bei geschlossener Zangenbremse ergibt sich ein Abstand 66C zwischen der Längsachse 63 und der Oberseite 62 des Bremsbelags 18.

Wenn die Zangenbremse 7 geschlossen wird, dann wird die fest in dem Führungskörper 56 befestige erste Bremsbacke 15 mit dem Führungskörper 56 näher an die Bremsbahn 20 gebracht, bis der Bremsbelag 18 an der Bremsbahn 20 anliegt. Dadurch verschwindet das Lüftungsspiel 60. Wenn die Zangenbremse 7 wieder geöffnet wird, dann ergibt sich der Abstand 66B zwischen der Längsachse 63 und der Bremsbahn 20 so, dass sich bei geöffneter Zangenbremse 7 ein vorgegebenes Lüftungsspiel 60 einstellt. Wenn sich im Betrieb der Bremsbelag 18 abschleift, dann verringern sich die Abstände 66B, 66C nach und nach, während das Lüftungsspiel 60 unabhängig von einer verbleibenden Bremsbelagdicke 67 des Bremsbelags 18 zumindest näherungsweise konstant bleibt.

Die anhand der Fig. 4 an der Seite 22 der Schiene 5 zwischen der Bremsbahn 20 und der ersten Bremsbacke 15 beschriebene Einstellung bei der Montage und die sich dann im Betrieb ergebende Funktionsweise ergeben sich in entsprechender Weise an der Seite 23 der Schiene 5 zwischen der Bremsbahn 21 und der zweiten Bremsbacke 17. Vorzugsweise ergeben sich hierbei zwischen der Bremsbahn 20 und der ersten Bremsbacke 15 zumindest näherungsweise ein gleich grosses Lüftungsspiele 60 wie zwischen der Bremsbahn 21 und der zweiten Bremsbacke 17, wenn die Zangenbremse 7 geöffnet ist.

Wie es in den Fig. 2 und 3 dargestellt ist, weist die Zangenbremse 7 einen Hubspindelantrieb 70 auf, durch den der erste Bremshebel 11 und der zweite Bremshebel 12 zum Ändern des entlang der Betätigungsachse 38 betrachteten Abstands 55 zwischen der ersten Bremsbacke 15 und der zweiten Bremsbacke 17 gegeneinander verstellbar sind. Hierbei wirkt der Hubspindelantrieb 70 zum Vergrössern des Abstands 55 zwischen der ersten Bremsbacke 15 und der zweiten Bremsbacke 17 der Schliessfeder 50 entgegen. Die Schliessfeder 50 verstellt zum Verringern des Abstands 55 zwischen der ersten Bremsbacke 15 und der zweiten Bremsbacke 17 mittels des Zwischenhebels 31 den ersten Bremshebel 11 und den zweiten Bremshebel 12 gegeneinander. Der Hubspindelantrieb 70 weist einen Motor 71 und eine Gewindespindel 72 auf. Die Gewindespindel 72 ist vorzugsweise als Kugelgewindespindel 72 ausgebildet. Hierbei ist die Gewindespindel 72 drehbar in einer Gewindemutter 73 geführt, die vorzugsweise als Kugelgewindemutter 73 ausgebildet ist.

Der Motor 71 wirkt über die Gewindespindel 72, die Gewindemutter 73 und den mit der Gewindemutter 73 verbundenen Zwischenhebel 31 auf den ersten Bremshebel 11 und den zweiten Bremshebel 12 ein, wenn der Motor 71 zum Vergrössern des Abstands 55 zwischen der ersten Bremsbacke 15 und der zweiten Bremsbacke 17 der Schliessfeder 50 entgegenwirkt. Die Gewindespindel 72 ist hierbei so ausgebildet, dass an der Gewindespindel 72 keine Selbsthemmung auftritt. Insbesondere kann hierfür das Gewinde der Gewindespindel 72 beziehungsweise das Gewinde der Gewindemutter 73 eine genügend hohe Steigung aufweisen, damit sicher keine Selbsthemmung auftritt. Somit kann durch den Motor 71, der die Gewindespindel 72 antreibt, die Zangenbremse 7 geöffnet werden. Die Kraft der Schliessfeder 50, eine sich ergebende Hebelübersetzung und die Gewindesteigung der Gewindespindel 72 bestimmen die Motorgrösse des Motors 71, welche vorzugsweise möglichst klein gewählt ist.

Der Motor 71 kann über einen Freilauf 74 mit der Gewindespindel 72 verbunden sein. Beim Schliessen der Zangenbremse 7 kann der Motor 71 dann ausgeschaltet und von der Schliessfeder 50 über den Zwischenhebel 31 und die Gewindespindel 72 angetrieben werden, wobei die Zangenbremse 7 geschlossen wird. Wenn die Zangenbremse 7 geschlossen ist, dann wird die Gewindespindel 72 abrupt abgebremst und der Motor 71 durch den Freilauf 74 abgekoppelt. Wegen seiner Trägheit läuft der Motor 71 weiter und wird dann durch Reibung abgebremst.

Anstelle des Freilaufs 74 kann auch eine schaltbare Kupplung 75 zwischen dem Motor 71 und der Gewindespindel 72 angeordnet sein. Je nach Anwendungsfall kann die schaltbare Kupplung 75 in vorteilhafter Weise genutzt werden, um die Schliesszeit der Zangenbremse 7 weiter zu reduzieren.

Da für das Öffnen der Zangenbremse 7 vorzugsweise nur wenige Umdrehungen der Gewindespindel 72 erforderlich sind und das Öffnen gegebenenfalls dadurch nur Sekundenbruchteile dauern kann, kann ein Nennmoment des Motors 71 gegebenenfalls auch deutlich überschritten werden. Zum Offenhalten der Zangenbremse 7 kann bei einer möglichen Ausgestaltung dann ein Drehmoment erforderlich sein, das von dem Motor 71 zum Offenhalten dauerhaft aufgebracht werden muss. Der Motor 71 kann dann so bemessen sein, dass er dieses Drehmoment dauerhaft aufbringen kann. Zum Öffnen der Zangenbremse 7 ist vorzugsweise eine bestimmte Anzahl an Umdrehungen der Gewindespindel 72 vorgegeben. Der Motor 71 wird dann so angesteuert, dass er zum Öffnen der Zangenbremse 7 immer eine bestimmte Anzahl an Umdrehungen macht und dann stillsteht. Diese Anzahl kann, muss aber nicht ganzzahlig sein. Somit ergibt sich ausgehend von einer geschlossenen Stellung, bei der die Bremsbacken 15, 17 an ihren Bremsbahnen 20, 21 anliegen, nach dem Öffnen der Zangenbremse 7 zumindest näherungsweise immer das gleiche Lüftungsspiel 60. Hierbei verschiebt sich die absolute Drehposition mit dem Verschleiss der Bremsbeläge 18, 19. Der Verschleiss kann mit einem Verschleissanzeigeschalter 76 überwacht werden. Beispielsweise kann der Zwischenhebel 31 den Verschleissanzeigeschalter 76 betätigen, wenn ein vorgegebener Verschleiss der Bremsbeläge 18, 19 erreicht ist. Bei einer Betätigung des Verschleissanzeigeschalters 76 wird die Aufzugsanlage 1 dann stillgelegt, bis ein Austausch der Bremsbeläge 18, 19 beziehungsweise der Bremsbacken 15, 17 erfolgt ist.

Somit kann der Hubspindelantrieb 70 so ausgebildet werden, dass ein Nachstellen des Abstands 55 zwischen der ersten Bremsbacke 15 und der zweiten Bremsbacke 17 bei einem Verschleiss der Bremsbeläge 18, 19 erfolgt. Dadurch ergibt sich beim Öffnen immer das gleiche Lüftungsspiel 60 und somit eine zumindest im Wesentlichen konstante, kurze Schliesszeit.

In diesem Ausführungsbeispiel ist die Gewindemutter 73 drehbar mit dem Zwischenhebel 71 verbunden.

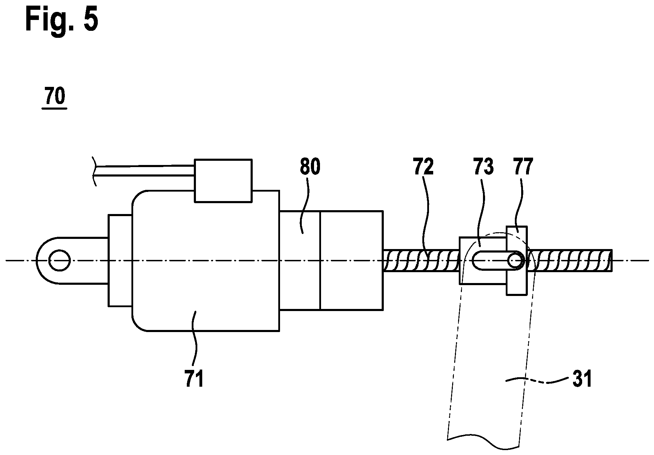

Fig. 5 zeigt einen Hubspindelantrieb 70 für die in Fig. 2 dargestellte Zangenbremse 7 gemäss einem zweiten Ausführungsbeispiel. In diesem Ausführungsbeispiel ist die Gewindemutter 73 durch einen linearen Freilauf 77 vom Zwischenhebel 31 entkoppelt. Dadurch kann ein abruptes Bremsen des Motors 71 verhindert werden. Das Bremsen des Motors 71 erfolgt dann beispielsweise durch Federkraft und Reibung.

Bei einer abgewandelten Ausgestaltung kann der Motor 71 mit einer Haltebremse 80 ausgerüstet sein. Die Funktionsweise des Motors 71 kann dann speziell auf das Öffnen der Zangenbremse 7 abgestimmt sein. Wenn der Motor 71 beispielsweise zum Öffnen der Zangenbremse 7 die Gewindespindel 72 um eine vorgegebene Anzahl an Umdrehungen gedreht hat, dann kann die Haltebremse 80 geschlossen werden. Dadurch kann die Zangenbremse 7 offengehalten werden, ohne dass der Motor 71 dauerhaft ein Drehmoment zum Offenhalten der Zangenbremse 7 aufbringen muss. Die Haltebremse 80 hält somit im Betrieb die Gewindespindel 72 in einer Position fest. Der Motor 71 kann dann nur zum Betätigen der Zangenbremse 7 benötigt werden. Hierbei kann der Motor 71 gegebenenfalls nicht nur zum Öffnen der Zangenbremse 7, sondern auch zum kontrollierten Schliessen der Zangenbremse 7 eingesetzt werden.

Die Erfindung ist nicht auf die beschriebenen Ausgestaltungen beschränkt.

## Patentansprüche

1. Zangenbremse (7), insbesondere Halte- und Sicherheitsbremse, für eine Aufzugsanlage (1) mit einem ersten Bremshebel (11) und einem zweiten Bremshebel (12), wobei eine erste Bremsbacke (15) an einem bremsbackenseitigen Ende (14) des ersten Bremshebels (11) angebracht ist, wobei eine zweite Bremsbacke (17) an einem bremsbackenseitigen Ende (16) des zweiten Bremshebels (12) angebracht ist, wobei der erste Bremshebel (11) an einem ersten Lagerpunkt (27) gelagert ist, wobei der zweite Bremshebel (12) an einem zweiten Lagerpunkt (28) gelagert ist und wobei die erste Bremsbacke (15) und die zweite Bremsbacke (17) mittels des ersten Bremshebels (11) und des zweiten Bremshebels (12) entlang einer Betätigungsachse (38) gegeneinander verstellbar sind,
und dass zumindest ein Zugelement (35) vorgesehen ist, das zumindest näherungsweise parallel zu der Betätigungsachse (38) verstellbar ist, wobei ein entlang der Betätigungsachse (38) betrachteter Abstand (39) zwischen dem ersten Zugelementlagerpunkt (36) und dem zweiten Zugelementlagerpunkt (37), der durch das Zugelement (35) vorgegeben ist, konstant bleibt, und dass der erste Bremshebel (11) zwischen seinem bremsbackenseitigen Ende (14) und dem ersten Lagerpunkt (27) an einem ersten Zugelementlagerpunkt (36) mit dem Zugelement (35) verbunden ist und dass der zweite Bremshebel (12) zwischen seinem bremsbackenseitigen Ende (16) und dem zweiten Lagerpunkt (28) an einem zweiten Zugelementlagerpunkt (37) mit dem Zugelement (35) verbunden ist,
**dadurch gekennzeichnet,**
**dass** der erste Lagerpunkt (27) ortsfest bezüglichem einem Gehäuseteil (29) angeordnet ist, dass ein Zwischenhebel (31) vorgesehen ist, der an einem Zwischenhebellagerpunkt (32) gelagert ist, dass der Zwischenhebellagerpunk (32) ortsfest bezüglich dem Gehäuseteil (29) angeordnet ist, dass der zweite Bremshebel (12) an dem zweiten Lagerpunkt (28) an dem Zwischenhebel (31) gelagert ist und dass der zweite Lagerpunkt (28) bei einer Drehung des Zwischenhebels (31) um den Zwischenhebellagerpunk (32) relativ zu dem Gehäuseteil (29) verstellbar ist.

2. Zangenbremse nach Anspruch 1,
**dadurch gekennzeichnet,**
**dass** der erste Zugelementlagerpunkt (36) und der zweite Zugelementlagerpunkt (37) zumindest näherungsweise parallel zu der Betätigungsachse (38) betrachtet voneinander beabstandet sind.

3. Zangenbremse nach einem der Ansprüche 1 und 2,
**dadurch gekennzeichnet,**
**dass** eine Schliessfeder (50) vorgesehen ist, die zum Verringern eines entlang der Betätigungsachse (38) betrachteten Abstands (55) zwischen der ersten Bremsbacke (15) und der zweiten Bremsbacke (17) zumindest mittelbar den ersten Bremshebel (11) und den zweiten Bremshebel (12) gegeneinander verstellt, und dass die Schliessfeder (50) zwischen dem ersten Bremshebel (11) und dem zweiten Bremshebel (12) angeordnet ist.

4. Zangenbremse nach einem der Ansprüche 1 bis 3,
**dadurch gekennzeichnet,**
**dass** die erste Bremsbacke (15) um zumindest eine Achse (43) drehbar an dem bremsbackenseitigen Ende (14) des ersten Bremshebels (11) angebracht ist und/oder dass die zweite Bremsbacke (17) um zumindest eine Achse (44) drehbar an dem bremsbackenseitigen Ende (16) des zweiten Bremshebels (12) angebracht ist.

5. Zangenbremse nach einem der Ansprüche 1 bis 4,
**dadurch gekennzeichnet,**
**dass** zumindest eine Vorspannrolle (45, 46) für die erste Bremsbacke (15) vorgesehen ist, die im Betrieb in einem geöffneten Zustand ein Lüftungsspiel zwischen der ersten Bremsbacke (15) und einer Bremsbahn (20) für die erste Bremsbacke (15) gewährleistet, und/oder dass zumindest eine Vorspannrolle (47, 48) für die zweite Bremsbacke (17) vorgesehen ist, die im Betrieb in einem geöffneten Zustand ein Lüftungsspiel zwischen der zweiten Bremsbacke (17) und einer Bremsbahn (21) für die zweite Bremsbacke (17) gewährleistet.

6. Zangenbremse nach Anspruch 5,
**dadurch gekennzeichnet,**
**dass** die zumindest eine Vorspannrolle (45, 46) für die erste Bremsbacke (15) einen elastischen Rollenbelag (45', 46') aufweist und dass im Betrieb im geöffneten Zustand der elastische Rollenbelag (45', 46') gegenüber der Bremsbahn (20) für die erste Bremsbacke (15) vorgespannt ist beziehungsweise dass die Vorspannrolle (47, 48) für die zweite Bremsbacke (17) einen elastischen Rollenbelag (47', 48') aufweist und dass im Betrieb im geöffneten Zustand der elastische Rollenbelag (47', 48') gegenüber der Bremsbahn (21) für die zweite Bremsbacke (17) vorgespannt ist.

7. Zangenbremse nach einem der Ansprüche 1 bis 6, **dadurch gekennzeichnet, dass** ein Hubspindelantrieb (70) vorgesehen ist, durch den der erste Bremshebel (11) und der zweite Bremshebel (12) zum Ändern eines entlang der Betätigungsachse (38) betrachteten Abstands (55) zwischen der ersten Bremsbacke (15) und der zweiten Bremsbacke (17) gegeneinander verstellbar sind, und zumindest eine Schliessfeder (50) vorgesehen ist, die zum Verringern des Abstands (55) zwischen der ersten Bremsbacke (15) und der zweiten Bremsbacke (17) zumindest mittelbar den ersten Bremshebel (11) und den zweiten Bremshebel (12) gegeneinander verstellt, und dass der Hubspindelantrieb (70) zum Vergrössern des Abstands (55) zwischen der ersten Bremsbacke (15) und der zweiten Bremsbacke (17) der Schliessfeder (50) entgegenwirkt.

8. Zangenbremse nach Anspruch 7,
**dadurch gekennzeichnet,**
**dass** der Hubspindelantrieb (70) einen Motor (71) und eine Gewindespindel (72), insbesondere eine Kugelgewindespindel (72), aufweist, dass der Motor (71) über die Gewindespindel (72)), insbesondere die Kugelgewindespindel (72), zumindest mittelbar auf den ersten Bremshebel (11) und den zweiten Bremshebel (12) einwirkt, wenn der Motor (71) zum Vergrössern des Abstands (55) zwischen der ersten Bremsbacke (15) und der zweiten Bremsbacke (17) der Schliessfeder (50) entgegenwirkt, und dass die Gewindespindel (72) so ausgebildet ist, dass an der Gewindespindel (72)), insbesondere an der Kugelgewindespindel (72), keine Selbsthemmung auftritt.

9. Zangenbremse nach Anspruch 8
und dass der Motor (71) mittels der Gewindespindel (72) auf einen Zwischenhebel (31) einwirkt, wenn der Motor (71) zum Vergrössern des Abstands (55) zwischen der ersten Bremsbacke (15) und der zweiten Bremsbacke (17) der Schliessfeder (50) entgegenwirkt, und dass die Schliessfeder (50) einerseits zumindest mittelbar an einem Gehäuse (30) abgestützt und andererseits zumindest mittelbar mit dem Zwischenhebel (31) verbunden ist, wobei insbesondere die Gewindespindel (72) durch einen linearen Freilauf (77) mit dem Zwischenhebel (31) verbunden ist.

10. Zangenbremse nach einem der Ansprüche 8 oder 9,
**dadurch gekennzeichnet,**
**dass** der Motor (71) mittels eines Freilaufs (74) oder mittels einer schaltbaren Kupplung (75) mit der Gewindespindel (72) verbunden ist.

11. Zangenbremse nach einem der Ansprüche 8 bis 10,
**dadurch gekennzeichnet,**
**dass** eine Haltebremse (80) für den Motor (71) vorgesehen ist, mittels der der Motor (71) im Betrieb in einem geöffneten Zustand der Zangenbremse zumindest teilweise entlastet ist.

12. Zangenbremse nach einem der Ansprüche 7 bis 11,
**dadurch gekennzeichnet,**
**dass** der Hubspindelantrieb (70) so ausgebildet ist, dass ein Nachstellen des Abstands (55) zwischen der ersten Bremsbacke (15) und der zweiten Bremsbacke (17) bei einem Verschleiss von Bremsbelägen (18, 19) der ersten Bremsbacke (15) und der zweiten Bremsbacke (17) erfolgt, und dass der Hubspindelantrieb (70) zumindest mittelbar einen Verschleissanzeigeschalter (76) betätigt, wenn ein vorgegebener Verschleiss der Bremsbeläge (18, 19) erreicht ist.

13. Zangenbremse nach einem der Ansprüche 7 bis 12,
**dadurch gekennzeichnet,**
**dass** der Hubspindelantrieb (70) so ausgebildet ist, dass ein Vergrössern des Abstands (55) zwischen der ersten Bremsbacke (15) und der zweiten Bremsbacke (17) aus einem geschlossenen Zustand in einen geöffneten Zustand zumindest näherungsweise mit einer vorgegeben, aber nicht notwendigerweise ganzzahligen Anzahl an Umdrehungen erfolgt.

14. Aufzugsanlage (1) mit einer Aufzugskabine (2) und zumindest einer an der Aufzugskabine (2) angeordneten Bremse (7, 8), die als Zangenbremse (7, 8) nach einem der Ansprüche 1 bis 13 ausgebildet ist.

## Claims

1. A caliper brake (7), particularly a holding and safety brake, for an elevator system (1), comprising a first brake lever (11) and a second brake lever (12), wherein a first brake pad (15) is attached to a brake pad end (14) of the first brake lever (11), wherein a second brake pad (17) is attached to a brake pad end (16) of the second brake lever (12), wherein the first brake lever (11) is mounted at a first mounting point (27), wherein the second brake lever (12) is mounted at a second mounting point (28), wherein the first brake pad (15) and the second brake pad (17) can be moved relative to one another along an actuation axis (38) by means of the first brake lever (11) and the second brake lever (12),
wherein at least one tension element (35) is provided and can be moved at least approximately parallel to the actuation axis (38), wherein a distance (39) between the first tension element mounting point (36) and the second tension element mounting point (37) along the actuation axis (38), which is defined by the tension element (35), remains constant, wherein the first brake lever (11) is connected to the tension element (35) between its brake pad end (14) and the first mounting point (27) at a first tension element mounting point (36), and wherein the second brake lever (12) is connected to the tension element (35) between its brake pad end (16) and the second mounting point (28) at a second tension element mounting point (37),
**characterized in**
**that** the first mounting point (27) is arranged stationary with respect to a housing part (29), in that an intermediate lever (31) is provided and mounted at an intermediate lever mounting point (32), in that the intermediate lever mounting point (32) is arranged stationary with respect to the housing part (29), in that the second brake lever (12) is mounted on the intermediate lever (31) at the second mounting point (28), and in that the second mounting point (28) can be moved relative to the housing part (29) during a rotation of the intermediate lever (31) about the intermediate lever mounting point (32).

2. The caliper brake according to claim 1,
**characterized in**
**that** the first tension element mounting point (36) and the second tension element mounting point (37) are spaced apart from one another at least approximately parallel to the actuation axis (38).

3. The caliper brake according to one of claims 1 and 2,
**characterized in**
**that** a closing spring (50) is provided and at least indirectly moves the first brake lever (11) and the second brake lever (12) relative to one another in order to decrease the distance (55) between the first brake pad (15) and the second brake pad (17) along the actuation axis (38), and in that the closing spring (50) is arranged between the first brake lever (11) and the second brake lever (12).

4. The caliper brake according to one of claims 1 to 3,
**characterized in**
**that** the first brake pad (15) is attached to the brake pad end (14) of the first brake lever (11) so as to be rotatable about at least one axis (43) and/or in that the second brake pad (17) is attached to the brake pad end (16) of the second brake lever (12) so as to be rotatable about at least one axis (44).

5. The caliper brake according to one of claims 1 to 4,
**characterized in**
**that** at least one pretensioning roller (45, 46) is provided for the first brake pad (15) and during the operation ensures a ventilation clearance between the first brake pad (15) and a braking track (20) for the first brake pad (15) in the open state and/or in that at least one pretensioning roller (47, 48) is provided for the second brake pad (17) and during the operation ensures a ventilation clearance between the second brake pad (17) and a braking track (21) for the second brake pad (17) in the open state.

6. The caliper brake according to claim 5,
**characterized in**
**that** the at least one pretensioning roller (45, 46) for the first brake pad (15) has an elastic roller coating (45', 46') and the elastic roller coating (45', 46') is during the operation pretensioned relative to the braking track (20) for the first brake pad (15) in the open state and/or in that the pretensioning roller (47, 48) for the second brake pad (17) has an elastic roller coating (47', 48') and the elastic roller coating (47', 48') is during the operation pretensioned relative to the braking track (21) for the second brake pad (17) in the open state.

7. The caliper brake according to one of claims 1 to 6, **characterized in that** a linear spindle drive (70) is provided and makes it possible to move the first brake lever (11) and the second brake lever (12) relative to one another in order to change a distance (55) between the first brake pad (15) and the second brake pad (17) along the actuation axis (38), **in that** at least one closing spring (50) is provided and at least indirectly moves the first brake lever (11) and the second brake lever (12) relative to one another in order to decrease the distance (55) between the first brake pad (15) and the second brake pad (17), and **in that** the linear spindle drive (70) counteracts the closing spring (50) in order to increase the distance (55) between the first brake pad (15) and the second brake pad (17).

8. The caliper brake according to claim 7,
**characterized in**
**that** the linear spindle drive (70) comprises a motor (71) and a threaded spindle (72), particularly a ball screw spindle (72), in that the motor (71) at least indirectly acts upon the first brake lever (11) and the second brake lever (12) via the threaded spindle (72), particularly the ball screw spindle (72), when the motor (71) counteracts the closing spring (50) in order to increase the distance (55) between the first brake pad (15) and the second brake pad (17), and in that the threaded spindle (72) is realized in such a way that no self-locking effect occurs on the threaded spindle (72), particularly on the ball screw spindle (72).

9. The caliper brake according to claim 8,
**characterized in**
**that** the motor (71) acts upon an intermediate lever (31) by means of the threaded spindle (72) when the motor (71) counteracts the closing spring (50) in order to increase the distance (55) between the first brake pad (15) and the second brake pad (17), and in that the closing spring (50) is on the one hand at least indirectly supported on a housing (30) and on the other hand at least indirectly connected to the intermediate lever (31), wherein the threaded spindle (72) particularly is connected to the intermediate lever (31) by a linear freewheel (77).

10. The caliper brake according to one of claims 8 or 9,
**characterized in**
**that** the motor (71) is connected to the threaded spindle (72) by means of a freewheel (74) or by means of a switchable clutch (75).

11. The caliper brake according to one of claims 8 to 10,
**characterized in**
**that** a holding brake (80) for the motor (71) is provided and during the operation at least partially relieves the motor (71) in an open state of the caliper brake.

12. The caliper brake according to one of claims 7 to 11,
**characterized in**
**that** the linear spindle drive (70) is realized in such a way that the distance (55) between the first brake pad (15) and the second brake pad (17) is readjusted as the attrition of brake linings (18, 19) of the first brake pad (15) and the second brake pad (17) progresses, and in that the linear spindle drive (70) at least indirectly actuates an attrition indicator switch (76) once a predefined attrition of the brake linings (18, 19) is reached.

13. The caliper brake according to one of claims 7 to 12,
**characterized in**
**that** the linear spindle drive (70) is realized in such a way that an increase of the distance (55) between the first brake pad (15) and the second brake pad (17) from a closed state into an open state at least approximately takes place with a predefined, but not necessarily integral number of revolutions.

14. An elevator system (1) with an elevator car (2) and at least one brake (7, 8), which is arranged on the elevator car (2) and realized in the form of a caliper brake (7, 8) according to one of claims 1 to 13.

## Revendications

1. Frein à sabot (7), notamment frein de retenue et de sécurité, pour une installation d'ascenseur (1), pourvu d'un premier levier de freinage (11) et d'un deuxième levier de freinage (12), une première mâchoire de frein (15) étant montée sur une extrémité (14) du côté mâchoire de frein du premier levier de freinage (11), une deuxième mâchoire de frein (17) étant montée sur une extrémité (16) du côté mâchoire de frein du deuxième levier de freinage (12), le premier levier de freinage (11) étant logé sur un premier point de logement (27), le deuxième levier de freinage (12) étant logé sur un deuxième point de logement (28) et la première mâchoire de frein (15) et la deuxième mâchoire de frein (17) étant ajustables l'une par rapport à l'autre au moyen du premier levier de freinage (11) et du deuxième levier de freinage (12) le long d'un axe d'actionnement (38),
et étant prévu au moins un élément de traction (35) qui est ajustable au moins approximativement à la parallèle de l'axe d'actionnement (38), un écart (39), considéré le long de l'axe d'actionnement (38) entre le premier point de logement (36) de l'élément de traction et le deuxième point de logement (37) de l'élément de traction qui est prédéfini par l'élément de traction (35) restant constant et le premier levier de freinage (11) étant assemblé entre son extrémité (14) du côté de la mâchoire de frein et le premier point de logement (27) sur un premier point de logement (36) de l'élément de traction avec l'élément de traction (35) et le deuxième levier de freinage (12) étant assemblé entre son extrémité (16) du côté de la mâchoire de frein et le deuxième point de logement (28) sur un deuxième point de logement (37) de l'élément de traction avec l'élément de traction (35),
**caractérisé**
**en ce que** le premier point de logement (27) est placé de manière stationnaire entre une partie de boîtier (29), en ce qu'il est prévu un levier intermédiaire (31), qui est logé sur un point de logement (32) de levier intermédiaire, en ce que le point de logement (32) de levier intermédiaire est placé de manière stationnaire par rapport à la partie de boîter (29), en ce que le deuxième levier de freinage (12) est logé sur le deuxième point de logement (28) sur le levier intermédiaire (31) et en ce que, lors d'une rotation du levier intermédiaire (31) autour du point de logement (32) de levier intermédiaire, le deuxième point de logement (28) est ajustable par rapport à la partie de boîtier (29).

2. Frein à sabot selon la revendication 1,
**caractérisé**
**en ce que**, considérés au moins approximativement à la parallèle de l'axe d'actionnement (38), le premier point de logement (36) de l'élément de traction et le deuxième point de logement (37) de l'élément de traction sont écartés l'un par rapport à l'autre.

3. Frein à sabot selon l'une quelconque des revendications 1 et 2,
**caractérisé**
**en ce qu'**il est prévu un ressort de fermeture (50) qui pour réduire un écart (55) considéré le long de l'axe d'actionnement (38) entre la première mâchoire de frein (15) et la deuxième mâchoire de frein (17) ajuste au moins indirectement l'un par rapport à l'autre le premier levier de freinage (11) et le deuxième levier de freinage (12) et en ce que le ressort de fermeture (50) est placé entre le premier levier de freinage (11) et le deuxième levier de freinage (12).

4. Frein à sabot selon l'une quelconque des revendications 1 à 3,
**caractérisé**
**en ce que** la première mâchoire de frein (15) est montée en étant rotative autour d'au moins un axe (43) sur l'extrémité (14) du côté mâchoire de frein du premier levier de freinage (11) et / ou en ce que la deuxième mâchoire de frein (17) est montée en étant rotative autour d'au moins un axe (44) sur l'extrémité (16) du côté mâchoire de frein du deuxième levier de freinage (12).

5. Frein à sabot selon l'une quelconque des revendications 1 à 4,
**caractérisé**
**en ce qu'**il est prévu au moins un rouleau de précontrainte (45, 46) pour la première mâchoire de frein (15), qui en cours de fonctionnement, lorsqu'il est ouvert assure un jeu de ventilation entre la première mâchoire de frein (15) et une piste de freinage (20) pour la première mâchoire de frein (15), et / ou en ce qu'il est prévu au moins un rouleau de précontrainte (47, 48) pour la deuxième mâchoire de frein (17), qui en cours de fonctionnement, lorsqu'il est ouvert assure un jeu de ventilation entre la deuxième mâchoire de frein (17) et une piste de freinage (21) pour la deuxième mâchoire de frein (17).

6. Frein à sabot selon la revendication 5, **caractérisé en ce que** l'au moins un rouleau de précontrainte (45, 46) pour la première mâchoire de frein (15) comporte un revêtement de rouleau (45', 46') élastique et **en ce qu'**en cours de fonctionnement, à l'état ouvert, le revêtement de rouleau (45', 46') élastique est précontraint par rapport à la piste de freinage (20) pour la première mâchoire de frein (15), respectivement **en ce que** le rouleau de précontrainte (47, 48) pour la deuxième mâchoire de frein (17) comporte un revêtement de rouleau (47', 48') élastique et **en ce qu'**en cours de fonctionnement, à l'état ouvert, le revêtement de rouleau (47', 48') élastique est précontraint par rapport à la piste de freinage (21) pour la deuxième mâchoire de frein (17).

7. Frein à sabot selon l'une quelconque des revendications 1 à 6,
**caractérisé**
**en ce qu'**il est prévu un entraînement (70) à broche de levage par lequel, pour modifier un écart (55) entre la première mâchoire de frein (15) et la deuxième mâchoire de frein (17) considéré le long de l'axe d'actionnement (38), le premier levier de freinage (11) et le deuxième levier de freinage (12) sont ajustables l'un contre l'autre et au moins un ressort de fermeture (50), qui pour réduire l'écart (55) entre la première mâchoire de frein (15) et la deuxième mâchoire de frein (17) ajuste au moins indirectement l'un contre l'autre le premier levier de freinage (11) et le deuxième levier de freinage (12) et en ce que pour augmenter l'écart (55) entre la première mâchoire de frein (15) et la deuxième mâchoire de frein (17), l'entraînement (70) à broche de levage agit à l'encontre du ressort de fermeture (50).

8. Frein à sabot selon la revendication 7,
**caractérisé**
**en ce que** l'entraînement (70) à broche de levage comporte un moteur (71) et une broche filetée (72), notamment une broche filetée à bille (72), en ce que le moteur (71) agit par l'intermédiaire de la broche filetée (72), notamment de la broche filetée à bille (72) au moins indirectement sur le premier levier de freinage (11) et le deuxième levier de freinage (12) lorsque pour augmenter l'écart (55) entre la première mâchoire de frein (15) et la deuxième mâchoire de frein (17), le moteur (71) agit à l'encontre du ressort de fermeture (50) et en ce que la broche filetée (72) est conçue de telle sorte que sur la broche filetée (72), notamment sur la broche filetée à bille (72) ne se produise aucun autoblocage.

9. Frein à sabot selon la revendication 8,
**caractérisé**
**en ce que** le moteur (71) agit au moyen de la broche filetée (72) sur un levier intermédiaire (31) lorsque pour augmenter l'écart (55) entre la première mâchoire de frein (15) et la deuxième mâchoire de frein (17), le moteur (71) agit à l'encontre du ressort de fermeture (50) et en ce que d'une part, le ressort de fermeture (50) s'appuie au moins indirectement sur un boîtier (30) et d'autre part est assemblé au moins indirectement avec le levier intermédiaire (31), notamment la broche filetée (72) étant assemblée par une roue libre (77) linéaire avec le levier intermédiaire (31).

10. Frein à sabot selon l'une quelconque des revendications 8 ou 9,
**caractérisé**
**en ce que** le moteur (71) est assemblé au moyen d'une roue libre (74) ou au moyen d'un couplage (75) commutable avec la broche filetée (72).

11. Frein à sabot selon l'une quelconque des revendications 8 à 10,
**caractérisé**
**en ce qu'**il est prévu un frein de retenue (80) pour le moteur (71), au moyen duquel lorsque le frein à sabot est ouvert, le moteur (71) est déchargé au moins partiellement en fonctionnement.

12. Frein à sabot selon l'une quelconque des revendications 7 à 11,
**caractérisé**
**en ce que** l'entraînement (70) à broche de levage est conçu de telle sorte qu'un réajustement de l'écart (55) entre la première mâchoire de frein (15) et la deuxième mâchoire de frein (17) s'effectue lors d'une usure des garnitures de frein (18, 19) de la première mâchoire de frein (15) et de la deuxième mâchoire de frein (17) et en ce que l'entraînement (70) à broche de levage actionne au moins indirectement un commutateur d'affichage d'usure (76), lorsqu'une usure prédéfinie des garnitures de frein (18, 19) est atteinte.

13. Frein à sabot selon l'une quelconque des revendications 7 à 12,
**caractérisé**
**en ce que** l'entraînement (70) à broche de levage est conçu de telle sorte qu'une augmentation de l'écart (55) entre la première mâchoire de frein (15) et la deuxième mâchoire de frein (17) d'un état fermé en un état ouvert s'effectue au moins approximativement à un nombre prédéfini mais pas nécessairement entier de tours.

14. Installation d'ascenseur (1) pourvue d'une cabine d'ascenseur (2) et d'au moins un frein (7, 8) placé sur la cabine d'ascenseur (2) qui est conçu sous la forme d'un frein à sabot (7, 8) selon l'une quelconque des revendications 1 à 13.
